(19) Europäisches Patentamt
European Patent Office
Office européen des brevets

(11) **EP 2 922 002 A1**

(12) **EUROPEAN PATENT APPLICATION**

(43) Date of publication:
**23.09.2015 Bulletin 2015/39**

(51) Int Cl.:
***G06Q 10/06*** *(2012.01)*     ***G06Q 50/20*** *(2012.01)*
***G06Q 10/10*** *(2012.01)*

(21) Application number: **15154966.4**

(22) Date of filing: **13.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.03.2014 IN MU09462014**

(71) Applicant: **Tata Consultancy Services Limited
Mumbai 400 021 (IN)**

(72) Inventors:
• **Gharote, Mangesh Sharad
411013 Pune (IN)**
• **Jain, Ankita
411013 Pune (IN)**
• **Palshikar, Girish Keshav
411013 Pune (IN)**
• **Srivastava, Rajiv Radheyshyam
411013 Pune (IN)**
• **Lodha, Sachin P.
411013 Pune (IN)**

(74) Representative: **Heinze, Ekkehard
Meissner, Bolte & Partner GbR
Postfach 86 06 24
81633 München (DE)**

(54) **System and method for generating a campus recruitment plan for an organization**

(57) System(s) and method(s) for generating campus recruitment plan for facilitating selection of a candidate for an organization is disclosed. A ranking score is assigned to each college from a list of colleges. Number of candidates to be selected from each college is determined. A predefined number of panels from a large pool of panels by using demographic details of each employee of the organization are selected. A utility score for each panel of the predefined number of panels by using the demographic details and recruitment capability of each employee is calculated. Based on skill set of each interviewer and each candidate, a panel-candidate matching index is computed. An optimal number of interview panels from the predefined number of panels for interviewing the number of candidates are selected based on the panel-candidate matching index and the utility score to generate the campus recruitment plan by using an optimization technique.

**FIGURE 4**

**Description**

REFERENCE TO RELATED APPLICATIONS

The present application does claim priority from an Indian Patent Application no. 946/MUM/2014 filed on 22nd March, 2014.

TECHNICAL FIELD

The present disclosure relates to a field of campus recruitment. More particularly, the present disclosure relates to the field of the campus recruitment to facilitate selection of candidates for an organization.

BACKGROUND

Campus recruitment plays an important role while recruiting candidates as per the demand of an organization for fresh talent. Candidates from large number of colleges are interviewed every year for selecting suitable candidates. Productivity of the organization up to a large extent depends on the candidates that are recruited and are employed for the organization. Now days, for improving the quality of recruitment, organizations are following various steps to improve the effectiveness of recruitment process such as analyzing colleges based on a ranking available from external source, for example, ranking by a global/national agency. However, there is still a possibility that college with a higher rank may not provide candidates showing high utility for the organization. Also the department level rankings are not available for colleges. Rankings are far coarser than a score, which is a continuous value and provides a measure of difference.
These days, while organizing the campus interviews, organizations are spending a huge amount of time in analyzing profiles of the candidates and also in setting relevant panels for interviewing the candidates. Clearly, such a large campus recruitment activity requires considerable planning, efforts and contributions from various people of the organization, including Human Resource (HR) executives and other company employees, most of whom are senior and high potential employees.
Most of the times, one of the prime challenge is to identify the colleges that may provide candidates who will perform better with respect to the values or attributes important to an organization. Another such challenge is to identify proportion of candidates to be interviewed or recruited with respect to the organization. Further, identification of interviewers for conducting technical and management interviews is also a difficult task as it involves optimal matching of talent or skills, experience, etc. of interviewers and candidates.

SUMMARY

This summary is provided to introduce concepts related to systems and methods for generating a campus recruitment plan for facilitating selection of a candidate for an organization and the concepts are further described below in the detailed description. This summary is not intended to identify essential features of the claimed subject matter nor is it intended for use in determining or limiting the scope of the claimed subject matter.
In one implementation, a method for generating a campus recruitment plan for facilitating selection of a candidate for an organization is disclosed. The method comprises of assigning a ranking score to each college from a list of colleges, wherein the ranking score is assigned based on past recruitment data of each college and determining a number of candidates to be selected from each college based on the ranking score, and a maximum quota value. The maximum quota value defines a maximum limit of candidates to be recruited from each college. The method further comprises selecting a predefined number of panels from a large pool of eligible, possible panels by using the demographic details of each employee of the organization, wherein each panel comprises of two or more interviewers selected from the employees, wherein the two or more interviewers are selected for recruiting suitable candidates from the number of candidates and computing a utility score for each panel of the predefined number of panels by using the demographic details and recruitment capability of each employee from the employees, wherein the utility score is derived using one or more selection rules. The method further comprises computing a panel-candidate matching index based on skill set of each interviewer and each candidate from the number of candidates, wherein the panel-candidate matching index is indicative of a recruitment capability of each panel with respect to the number of candidates. The method further comprises selecting an optimal number of interview panels from the predefined number of panels, for interviewing the number of candidates based on the panel-candidate matching index and the utility score, thereby generating the campus recruitment plan, wherein the campus recruitment plan is generated by using an optimization technique.
In one implementation, a system for generating a campus recruitment plan for facilitating selection of a candidate for an organization is disclosed. The system comprises a processor and a memory coupled to the processor. The processor is capable of executing a plurality of modules stored in the memory. The plurality of modules comprises an assigning module configured to assign a ranking score to each college from a list of colleges, wherein the ranking score is assigned based on a past recruitment data of each college. The plurality of modules comprises a determination module configured to determine a number of candidates to be selected from each college based on the ranking score and a maximum quota value and a first selection module configured to select a predefined number of panel from a large pool of panels by using demographic details of each employee of the organization, wherein each panel of the predefined number of panels comprise two or more interviewers selected from the employees, wherein the two or more interviewers are selected for recruiting suitable candidates from the number of candidates. The plurality of modules comprises a calculation module configured to calculate a utility score for each of the panel from the predefined number of panels, using the demographic details and recruitment capability of each employee, wherein the utility score is associated with one or more selection rules and a computing module configured to compute a panel-candidate matching index based on skill set of each interviewer and each candidate from the number of candidates, wherein the panel-candidate matching index is indicative of a recruitment capability of each panel with respect to the number of candidates. The plurality of modules comprises a second selection module configured to select an optimal number of panels from the predefined number of panels for interviewing the number of candidates based on the panel-candidate matching index and the utility score, thereby generating the campus recruitment plan, wherein the campus recruitment plan is generated by using an optimization technique.

In one implementation, a non-transitory computer readable medium embodying a program executable in a computing device for generating a campus recruitment plan for facilitating selection of a candidate for an organization is disclosed. The computer program product comprises a program code for assigning a ranking score to each college from a list of colleges, wherein the ranking score is assigned based on a past recruitment data of each college and determining a number of candidates to be selected from each college based on the ranking score, and a maximum quota value. The computer program product further comprises a program code for selecting a predefined number of panels from a large pool of panels by using the demographic details of each employee of the organization, wherein each panel comprises of two or more interviewers selected from the employees, wherein the two or more interviewers are selected for recruiting suitable candidates from the number of candidates and computing a utility score for each panel of the predefined number of panels by using the demographic details and recruitment capability of each employee from the employees, wherein the utility score is associated with one or more selection rules. The computer program product further comprises a program code for computing a panel-candidate matching index based on skill set of each interviewer and each candidate from the number of candidates, wherein the panel-candidate matching index is indicative of a recruitment capability of each panel with respect to the number of candidates. The computer program code further comprises a program code for selecting an optimal number of interview panels from the predefined number of panels, for interviewing the number of candidates based on the panel-candidate matching index and the utility score, thereby generating the campus recruitment plan, wherein the campus recruitment plan is generated by using an optimization technique.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.

Figure 1 illustrates a network implementation of a system for generating a campus recruitment plan for facilitating selection of a candidate for an organization, in accordance with an embodiment of the present disclosure.
Figure 2 illustrates the system, for generating a campus recruitment plan for facilitating selection of a candidate for an organization.
Figure 3 illustrates steps involved in generating the campus recruitment plan, in accordance with an embodiment of the present disclosure.
Figure 4 shows the candidates distribution, in accordance with an embodiment of the present disclosure.
Figure 5a and 5b illustrates comparative results on a basis of panel composition and candidate-panel matching index, in accordance with an embodiment of the present disclosure.
Figure 6 illustrates a method for generating a campus recruitment plan for facilitating selection of a candidate for an organization, in accordance with an embodiment of the present disclosure.

DETAILED DESCRIPTION

System(s) and method(s) for generating a campus recruitment plan for facilitating a candidate selection for an organization are disclosed. A ranking score is assigned to each college and number of candidate to be selected from each college is determined based on a ranking score. A number of interview panels are formed consisting of employees by calculating a utility score and a panel-candidate matching index. The campus recruitment plan is generated based on the number of panels by using an optimization technique. While aspects of described system and method for generating a campus recruitment plan for facilitating selection of a candidate for an organization may be implemented in any number of different computing systems, environments, and/or configurations, the embodiments are described in the context of the following exemplary system.

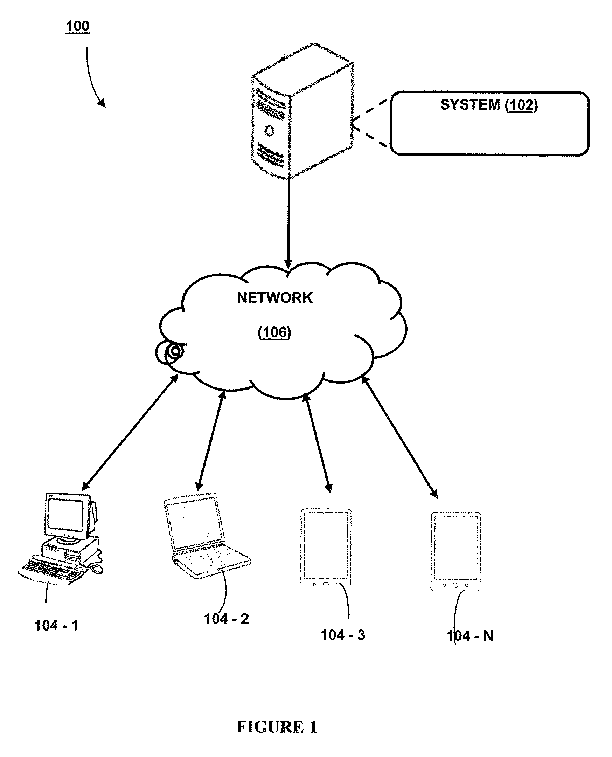

Referring now to Figure. 1, a network implementation 100 of a system 102 for generating a campus recruitment plan to facilitate selection of a candidate for an organization is illustrated, in accordance with an embodiment of the present disclosure. The system 102 facilitates a mechanism for ranking institutions based on past employees data (considering factors such as performance, tenure and attrition). The system 102 provides an estimation of number of students (candidates) to be selected or recruited from each institute as well as department wise distribution using the institute /department ranking. The system 102 also provides panel selection consisting of employees for conducting interviews by measuring effectiveness of the panels so formed. The system 102 also facilitates screening of the panels and select panels from a large pool of interviewers. The system 102 further provides an evaluation of interviewers based on the performance of selected candidates as well as various personal factors. The personal factors comprise availability, timeliness, total per year participations in drive and alike.

Although the present disclosure is explained by considering a scenario that the system 102 is implemented as an application on a server, it may be understood that the system 102 may also be implemented in a variety of computing systems, such as a laptop computer, a desktop computer, a notebook, a workstation, a mainframe computer, a server, a network server, and the like. It will be understood that the system 102 may be accessed by multiple users through one or more user devices 104-1, 104-2...104-N, collectively referred to as user devices 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

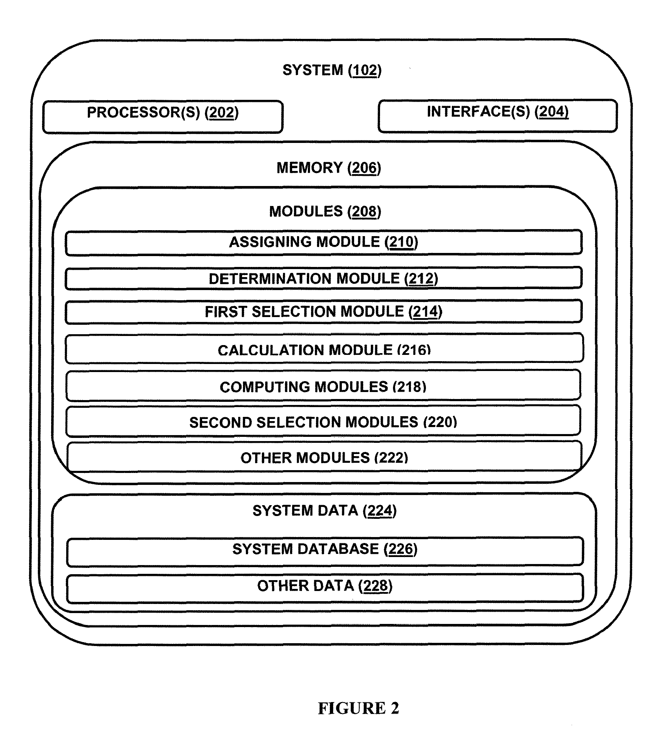

Referring now to Figure.2, the system 102 is illustrated in accordance with an embodiment of the present disclosure. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with a user directly or through the user devices 104. Further, the I/O interface 204 may enable the system 102 to communicate with other computing devices, such as web servers and external data servers (not shown). The I/O interface 204 may facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include modules 208 and system data 224.

The modules 208 include routines, programs, objects, components, data structures, etc., which perform particular tasks or implement particular abstract data types. In one implementation, the modules 208 may include an assigning module 210, a determination module 212, first selection module 214, a calculation module 216, a computing module 218, a second selection module 220 and other modules 222. The other modules 222 may include programs or coded instructions that supplement applications and functions of the system 102.

The system data 224, amongst other things, serves as a repository for storing data processed, received, and generated by one or more of the modules 208. The system data 224 may also include a system database 226 and other data 228. The other data 228 may include data generated as a result of the execution of one or more modules in the other modules 222.

In one implementation, at first, the assigning module 210 is configured to assign a ranking score to each college from a list of colleges. The ranking score is assigned based on a past recruitment data. The past recruitment data comprises past employee as well as existing employee data. The past employee comprises employee of the organization that were recruited from the colleges present in the list of colleges. The assigning module 110 analyzes the past performance of the past as well as existing employees from respective colleges. The past and present employee data comprises parameters. The parameters comprises test scores of past and present employees, interview scores of the past employees, project experience of the past and present employees, and social index of the past and present employees. The past recruitment data further comprises tenure of the past employee from respective colleges. The parameters are exemplary and this is to be understood by a person ordinary skilled in the art that other similar parameters may also be considered.

The assigning module 110 is further configured to assign a faculty ranking score to a faculty of each college or a department ranking score to a department of each college.

The assigning of the ranking score by the assigning module 110 is discussed below:

The notations used for assigning the ranking score is described below in table 1:

Table 1

| Sr.No | | Attributes |
|---|---|---|
| 1 | $Jr^i$ | Joining ratio for $i^{th}$ college |
| 2 | $Pb^i$ | Performance Band for $i^{th}$ college |
| 3 | $T^i$ | Tenure for $i^{th}$ college |
| 4 | $A^i$ | Attrition for $i^{th}$ college |
| | | **Weights** |
| 5 | $W_k$ | Weight for each attributes (j = 1, ..., K) |
| 6 | $S^i$ | Score for $i^{th}$ college (i = 1, ..., n) |

All the attributes are derived from the past employees data. As default values for $W_k$ the assigning module 110 give relative importance as follows in Table 2:

Table 2

| Importance | Very High | High | Medium | Low |
|---|---|---|---|---|
| **Attribute** | Attrition | Joining Ratio | Tenure | Performance Band |
| **Weight** | 0.4 | 0.3 | 0.2 | 0.1 |

Further details of assigning ranking score are explained below:

Step 1: Generalized function for computing score for each college

$$f(S^i) = \sum_{k=1}^{K} w_k * p_k^i \qquad \forall i$$

Specific step as per the organization under consideration:

$$f(S^i) = Jr^i * w_1 + Pb^i * w_2 + T^i * w_3 + A^i * w_4 \quad \forall i = 1, ..., n$$

$w_k$ may also be specified by the user as per the organizations criteria.

The assigning module 110 finds an average for each of the above mentioned parameters (i.e. past recruitment data or attributes) using the organization's employee data.

Consider i = 1, ..n number of colleges to be assigned the ranking score

Let

$p_1$ = average performance of the employees from the ith college in the organization.

$p_2$ = average tenure of the employees from a particular college in the organization.

$p_3$ = average number of employees who resigned the organization.

$p_4$ = ratio of number of students who were offered or recruited to a number of students who joined the organization.

The above mentioned list of attributes ($p_1$, $p_2$, $p_3$ and $p_4$) representative of performance may include other attributes.

Next step is computing weights (computing weights is iterative):

Let $w_i$ are the weights for each parameter (the past recruitment data) and i= 1,..4.

The weights signify an importance of each of these parameters. There are following ways of estimating these weights:

- Based on past rank data, the assigning module 112 uses a regression technique to derive weights for each parameter. In this way, the assigning module 110 may keep on learning and improving the weights.

- The weights are further improved by using a domain expert knowledge.

The assigning module 110 further determines a ranking index to assign the ranking score. The ranking index may be represented as:

$$r_i = w_1 p_1 + w_2 p_2 + w_3 p_3 + w_4 p_4$$

wherein, $w_1$, $w_2$, $w_3$ and $w_4$ are weights assigned to the past recruitment data.

The assigning module 110 sorts the ranking index in a decreasing order of $r_i$ and derive and assigns the ranking score (an integer value) to each of the college in the list of college.

In next recruitment cycle (for example next year), the attributes values will be automatically upgraded by the assigning module 110, using the lasted data fed to the system 102.

In one implementation, the determination module 212 is configured to determine a number of candidates to be selected from each college based on the ranking score and a maximum quota value. The determination module 212 is configured to estimate the number of candidates (students) to be selected from colleges as well as departments within the colleges based on the ranking score computed by the assigning module 210. The determination module 212 gives freedom to Human Resource (HR) manager to select the candidates based on a scheme ranging from highest quota to highest ranked college i.e. college with a highest ranking score to other extreme (i.e. college with lowest ranking score) of uniform quota distribution to all college/departments.

The determination module 212 uses a Water-Fill algorithm to fill candidates to be recruited from each of the college in accordance with a user specified level value. The user specified lever value reflects on a uniformity or skewness of distribution of candidates in favour of higher ranked colleges i.e. colleges with the higher ranking score. If user selects uniformity of distribution to be high, then the determination module 212 may distribute students uniformly across all colleges. If the user selects uniformity of distribution to be low i.e. skewed in favor of higher ranked institutes/departments, then the determination module 212 may select more number of students from the colleges with higher ranking score.

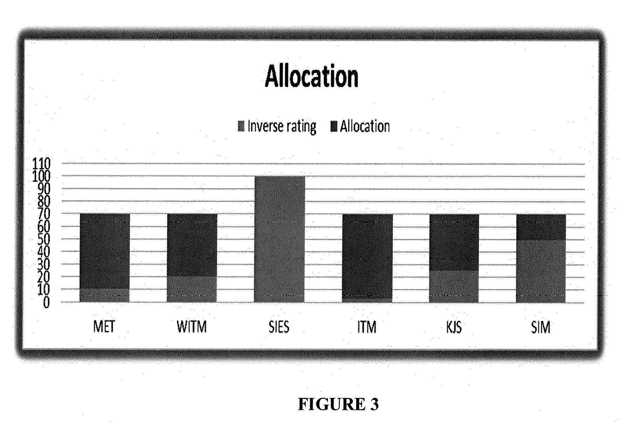

By way of a non limiting example, college with higher rank may be allocated relatively higher number of candidates. The determination module provides user a facility to determine a type of distribution. The type of distribution comprises Uniform distribution or distributed towards top rated institutes (i.e. colleges with high ranking score). Referring to figure 3, graph is shown for a college with low ranking/rating the inverse rating will be high (gray part of bar for a college). The black part is possible scope for filling into the quota for a college. The system 102 assumes that 100 is a highest possible quota for a college. Now if the determination module 112 starts filling the empty connected cylinders (as shown in figure 3) in a manner water fills a set of containers, the bar with lowest gray part will start filling early. The determination module 212 performs the filling for total quota to be hired from all of the colleges. The determination module 212 then checks the amount of water units filled. This is to be observed that the bars having lower level of 'gray' will have higher quota allocated.

The first selection module 214 is configured to select a predefined number of panels from a large pool of panels using the demographic details of each employee and the utility score. Each panel comprises of two or more interviewers selected from the pool of employees. The two or more interviewers are selected for recruiting suitable candidates from the number of candidates.

The calculation module 216 is configured to compute a utility function to measure panel effectiveness. A utility score from the utility function is computed for each panel formed by grouping the employees of the organization into the one or more panels. The utility score is computed by using demographic details and recruitment capability of each employee. The demographic details comprise employee's hometown, college details (name, location), graduation and/or post-graduation branch, or a combination thereof. The utility score is associated with one or more selection rules. The one or more selection rules are user specific rules.

The utility score is computed based on following selection rules (user specific rules):

- A panel with an interviewer with previous interview experience or formal training in conducting interview is given priority while selecting the panel. By way of a non limiting example, it is assumed that there are three employees (e1, e2, e3) where (e1, e2) have no previous interview experience while e3 has two years of interview experience. Here, the system 102 prefers panel combination (e1, e3) or (e2, e3) rather than selecting (e1, e2) panel combination.

- Similarly, the system 102 prefers a panel with junior and senior combination than panel with same experience. By way of a non limiting example, the system 102 assumes that there are three employees (e1, e2, e3) with designations as (Information Technology Analyst ITA, Assistant Systems Engineer ASE). In this case, the system prefers panel combination (e1, e3) or (e2, e3) rather than selecting (e1, e2) panel combination.

- Panel comprising of interviewer having association with the colleges from the list of colleges (being alumni or part time faculty or from same location or state, etc.) may be given priority.

The calculation module 216 computes the utility score of assigning an interviewer from one set to the interviewer in another set. Let $U_j$ be the utility score of panel $j$. The utility score for each panel is computed using the above stated selection rules. Furthermore rules may be added to enrich this utility function.
- Let 'E' be a set of 'n' employees,
- $(E^i, E^j)$ = *Represents the panel p,*
- $U_p(E^i, E^j)$ = Represents the utility value of panel
- Each employee has a specific set of attributes. Example (Table 3):

Table 3

|  | **Employee 1** | **Employee 2** | **Employee 3** |
|---|---|---|---|
| **Programming Skill** | Java | C++ | MatLab |
| **Grade** | C1 | C2 | C2 |
| **Campus Interview Experience** | 2 | 1 | 0 |

The computing module 216has designed a function to compute the utility score for each panel, based on the skill set relationship matrix, and comparing the differences in the grade and prior campus experience.

$$U_p = f(Skillset, Grade, Exp)$$

The system 102 solves the weighted bipartite matching problem using linear programming, where weights are captured through utility function. Output of the calculation module 214 is panels formed with the utility scores.

The computing module 218 is configured to compute a panel-candidate matching index based on skill set (skill category and subject disciple) of each interviewer and each candidate from the number of candidates. The panel-candidate matching index is indicative of a recruitment capability of each panel with respect to the number of candidates. The panel-candidate matching index is computes in a way such that each panel should be able cater to interview of students with varied Skill category and Disciples. The Skill category comprises Skills such as C, CPP, Java, MS.NET, and alike. The subject disciples comprises CS, Electronics, Mechanical and alike.

The panel-candidate matching index is computed with following facts:

The panel-candidate matching index is considered as worst and is assigned with a penalty value if interview panel skill sets do not match the students' skill category. Similarly, the panel-candidate matching index is considered as good, if the panel is able to interview maximum varied student's category. For example, the computing module 218 assigns a low penalty value to a panel if student skill category matches with the panel i.e. interviewers in the panel, or if the panel members have different skills set and any one panel members skill matches with the student's skill category. Also, the computing module 218 further define an intermediate matching as poor matching, if both panel members' skill sets are same and matches the student's skill category.

Let $w_{ij}$ represent the matching value for assigning $j^{th}$ panel to $i^{th}$ student category and let $X_{ij}$ represent the number of students of $i^{th}$ category assigned to $j^{th}$ panel. Matching Index = $w_{ij}*X_{ij}$

The second selection module 220 is configured to select an optimal number of suitable panels from the predefined number of panels for interviewing the number of candidates based on the panel-candidate matching index and the utility score of the panel.

The objective of the system 102 is to select the panel with maximum utility score. The further objective is that panel is preferred with a better panel-candidate matching index (or simply matching index). An objective function (i.e. maximum utility value and better matching index) enforces selection of panels with higher utility value (i.e. better panel composition) and higher matching index (that is, fewer mismatches in assigned panel and candidate (student) category).

The second selection module 220 is further configured to provide a panel screening. If the system 102 consider all possible combinations of panels then a problem size (i.e. problem of selecting optimal number of panels) increases nonlinearly (quadratically) and hence the time required to solve an optimization formulation i.e. solution for the problem by using a Mixed Integer Linear Programming technique (an optimization technique) increases. The system 102 by way of one or more modules from the plurality of modules uses or executes the Mixed Integer Linear Programming technique as the optimization technique for generating the campus recruitment plan.

The system 102 considers a set of n employees (interviewers) and panel size of two. Each employee may form a pair with another employee and such $C_2^n = \frac{n!}{2!(n-2)!}$ combinations of panels are possible. This subset is called as potential pool of panels from which panels would be selected for campus interviews.

By way of a non limiting example, a company (ABC) team visits each college on the very first day of the start of the college's placement activities. It is to be considered that the ratio of the number of candidates to be interviewed to the candidates selected is 3:1. Thus around 120,000 students are interviewed each year (40,000 were recruited). Thus, selecting the interview panels and matching with the candidates with varied skill sets and education background (Computer Science, Mechanical, etc.) becomes a challenging task.

For every college to be visited, a recruitment team manager has to select a set of interviewers for carrying out technical and management interviews. The system 102 considers a set of n employees (interviewers) and panel size of two. Each employee may form a pair with another employee and such $C_2^n = \frac{n!}{2!(n-2)!}$ combinations of panels are possible. System 102 needs a numerical measure to find effectiveness of each panel formed, so that a best panel composition for a particular college may be selected.

Thus, the second selection module 220 selects a subset of panels from all the possible panel combinations to reduce on time complexity. The subset is selected with following properties:

- Each interviewer should get chance for being selected for interview.
- Select the panels with maximum utility value.

The second selection module 220 selects or forms two sets of interviewers. In one set the second selection module 220 puts interviewers with higher campus experience and in other set the second selection module 220 puts interviewers with lower experience.

The campus recruitment plan is generated based on the panel-candidate matching index. The campus recruitment plan is generated by an optimization technique.

In one implementation, the use of the Linear programming approach as the optimization technique by the system 102 for generating the campus recruitment plan is discussed below:

Let $x_i$ be the number of employees hired from college $i$, with rating (ranking score) $r_i$.

Suppose the utility score derived from each employee hired is proportional to the rating of the college from which the employee was hired. The total utility is then given by $\Sigma_i x_i r_i$.

If the total number to be hired is $c$, and the maximum limit for college $i$ is $c_i$, then the Linear Problem (LP) may be written as:

$$maximise \sum_i x_i r_i$$

$$subject\ to\ \sum_i x_i \leq C$$

$$0 \leq x_i \leq C_i.$$

The optimization technique followed by the system 102 comprises:

The system 102 assume that the utility of hiring is of logarithmic form: $\log(1 + kx_ir_i)$, where **k** is a parameter for scaling the ranking scores. The resulting convex optimization problem is

$$maximise\ \sum_i \log(1 + kx_ir_i)$$

$$subject\ to\ \sum_i x_i \leq C$$

$$0 \leq x_i \leq C_i.$$

The solution ($x_i$) to the LP, provide the campus recruitment plan for each college and thus provides the campus recruitment plan.

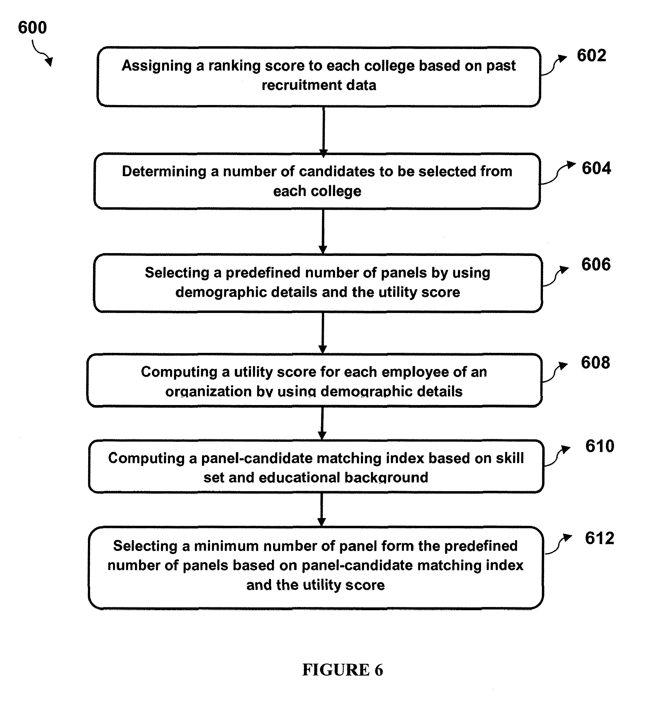

Referring now to FIG. 6, a method 600 is shown, a method for generating a campus recruitment plan for facilitating a selection of a candidate for an organization, is discussed in accordance with an embodiment of the present disclosure. The method 600 may be described in the general context of computer executable instructions. Generally, computer executable instructions can include routines, programs, objects, components, data structures, procedures, modules, functions, etc., that perform particular functions or implement particular abstract data types. The method 600 may also be practiced in a distributed computing environment where functions are performed by remote processing devices that are linked through a communications network. In a distributed computing environment, computer executable instructions may be located in both local and remote computer storage media, including memory storage devices.

The order in which the method 600 is described and is not intended to be construed as a limitation, and any number of the described method blocks can be combined in any order to implement the method 600 or alternate methods. Additionally, individual blocks may be deleted from the method 600 without departing from the spirit and scope of the disclosure described herein. Furthermore, the method may be implemented in any suitable hardware, software, firmware, or combination thereof. However, for ease of explanation, in the embodiments described below, the method 600 may be implemented in the above-described system 102.

At step 602, a ranking score is assigned to each college from a list of colleges by using a past recruitment data by the assigning module 210.

At step 604, a number of candidates to be selected from each college based on the ranking score and a maximum quota value are determined by the determination module 212.

At step 606, a predefined number of panels from a large pool of panels by using demographic details of each employee and the utility score are selected by the first selection module 214. Each panel comprise one or more interviewers selected from the employees. The two or more interviewers are selected for recruiting suitable candidates from the number of candidates.

At step 608, a utility score for each panel from the predefined panels by using the demographic details and recruitment capability of each employee is calculated by the calculation module 216. The utility score is associated with one or more selection rules. At step 610, a panel-candidate matching index based on skill set of each interviewer and each candidate from the number of candidates is computed by the computing module 218. The panel-candidate matching index is indicative of a recruitment capability of each panel with respect to the number of candidates. .At step 612, an optimal number of panels from the predefined number of panels for interviewing the number of candidates based on the panel-candidate matching index and the utility score are selected by the second selection module 220. Based on the panel-candidate matching index, the campus recruitment plan is generated by using an optimization technique.

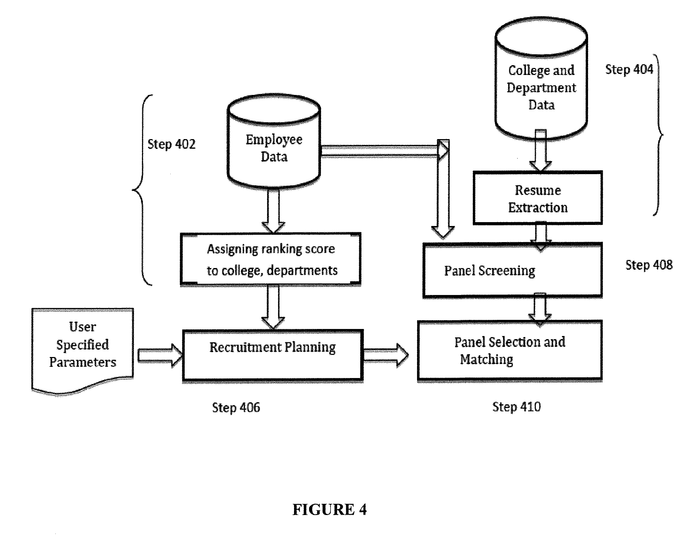

Referring to figure 4, the method for generating a campus recruitment plan for selecting a candidate for an organization by using the optimization technique (MILP) may be explained by way of a non limiting exemplary embodiment.

Let,

$m$   Number of panels
$k$   Students skill category

*Decision Variables*

$X_{ij}$   Number of students of $i^{th}$ skill category assigned to the $j^{th}$ panel

$Y_j$   =1, if panel $j$ is selected for campus interview, otherwise 0.

*Known Parameters*

$w_{ij}$   Matching value for assigning $i^{th}$ student category to $j^{th}$ panel in the range [0 - 1]
$U_j$   Utility value of panel $j$ in the range [0 -1]
$\tilde{d}_i$   Average number of students in $i^{th}$ skill category
$S_f$   Scaling factor

The objective is to select the minimum number of panels such that the selected panels can conduct interviews for maximum number of students. The selected panel shave maximum utility scores (i.e. better panel composition) and less skill set mismatches score. The method computes the matching value as per the panel and student skill fitment.

*Minimize*

$$Z = \sum_{j}^{m} S_f * (1 - U_j) * Y_j + \sum_{i=1}^{k} \sum_{j=1}^{m} w_{ij} * X_{ij} \qquad (1)$$

*Subject to*

The constraint that the maximum number of interviews that may be taken by each panel cannot exceed a defined capacity (Cap). The constraint has to be satisfied by certain significance level ($\propto_1 \in (0,1)$). Capacity is calculated on the basis of working hours divided by average interview time per candidate.

$$P\left\{\sum_{i=1}^{k} X_{ij} \leq Y_j * \widetilde{Cap}\right\} \geq \propto_1 \ \forall j = 1, \ ..., \ m \qquad (2)$$

The estimated number of interviews of each skill category must be conducted by the assigned panel (step 402 to 408). The constraint has to be satisfied by certain significance level($\propto_2 \in (0,1)$).

$$P\left\{\sum_{j=1}^{m} X_{ij} \geq \tilde{d}_i\right\} \leq (1-\alpha_2) \qquad \forall i = 1, \ldots, k \qquad (3)$$

$$X_{ij} \geq 0, \forall i \, and \, \forall j \qquad (4)$$

$$Y_j = \{1,0\} \qquad (5)$$

Due to equation (2 and 3) the problem becomes Mixed Integer Non-Linear Programming problem. As shown in step 410, assuming normal distribution of the estimated number of students to be interviewed and interview time, the equation (2 and 3) are linearize. This Mixed Integer Linear Programming problem is solved by using IBM ILOG CPLEX Optimization Studio with input output data files connection with MS Excel. Output of this module is panels selected and number of candidates (students) allocated of each panel.

The method compares a solution of generating the campus recruitment plan with a known approach. In the known approach, the method neglects an uncertainty factor, and considers a deterministic number of students that are going to be interviewed in a particular college. The method arrives at the number of panels to be selected for interview, using a simple formula. Let m be the number of panels selected. Then,

$$m = \text{Roundup (number of students to be interviewed * time required per student/ time}$$

available for each panel).

The method randomly (using uniform distribution) picks 'm' panels from all the possible panel combinations; such that each panel is unique (means no interviewer is present in more than one panel). The method assigns panels arbitrarily to each student's category. Each selected panel is allocated with number of students such that it doesn't exceed their maximum interview capacity. The method computes the total utility score and a total panel-candidate matching index for each case.

The solution proposed by the method is tested against a known approach by using 10 test cases. First two columns in Table 4, describes the test case details. The first column describes an estimated number of students to be interviewed and the second column states a pool of people (employees) available for taking the interviews. In each case the method has considered a different set of data. The data is generated hypothetically using the knowledge bank of Human Resource Management team. The results obtained by the method are compared based on the three parameters. The three parameters comprise number of panel selected, sum of the utility scores of the panel selected, and sum of the panel to students matching index.

As seen from the Table 4 the numbers of panel selected by the method and the known approach are nearly same. The known approach estimates the number of panels required by using total actual number of students to be interviewed while in the method of the present disclosure, an uncertainty factor is also considered. Also the weights used in the Mixed Integer Linear Programming Problem (MILP) formulation plays an important role. If one assigns high weight to one objective and low weight to other than the solution may differ. In the demonstrated results weights are chosen such that equal weight age is given to both the objectives (minimum panel selection and maximize panel to students matching index).

Table 4 Comparison- Number of panels selected

| Case | Estimated Candidates | Pool | No of Panels Selected | |
|------|----------------------|------|-------------|-----------------|
| | | | Optimization | Random approach |
| 1 | 50 | 20 | 3 | 3 |
| 2 | 100 | 20 | 5 | 5 |
| 3 | 150 | 30 | 7 | 8 |
| 4 | 200 | 30 | 9 | 10 |
| 5 | 250 | 40 | 12 | 12 |
| 6 | 300 | 40 | 14 | 15 |

(continued)

| Case | Estimated Candidates | Pool | No of Panels Selected | |
| --- | --- | --- | --- | --- |
| | | | Optimization | Random approach |
| 7 | 350 | 60 | 17 | 17 |
| 8 | 400 | 60 | 19 | 20 |
| 9 | 450 | 60 | 21 | 22 |
| 10 | 500 | 100 | 24 | 24 |

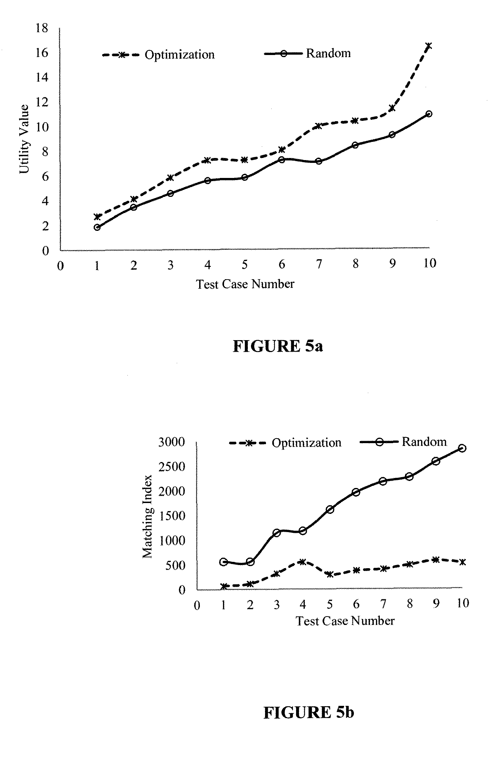

Figure 5a show that using optimization, panels with higher utility values are always selected. Higher utility resembles better panel pairings in terms of interviewing students.

Figure 5b shows that using random search approach for panel selection, matching index is on average five times higher than optimization approach. Matching index higher means many mismatches in student's skill category and interview panel's allotment. Using optimization, selected panels are capable to take interviews of many students for that particular college.

Although implementations of system and method for generating a campus recruitment plan for facilitating a candidate selection for an organization have been described in language specific to structural features and/or methods, it is to be understood that the appended claims are not necessarily limited to the specific features or methods described. Rather, the specific features and methods are disclosed as examples of implementations for generating the campus recruitment plan.

**Claims**

1. A method for generating a campus recruitment plan for facilitating selection of a candidate for an organization, the method comprising:

   assigning, in an assigning module (210), a ranking score to each college from a list of colleges, wherein the ranking score is assigned based on a past recruitment data of each college;
   determining, in a determination module (212), a number of candidates to be selected from each college based on the ranking score, and a maximum quota value, wherein the maximum quota value defines a maximum limit of candidates to be recruited from each college;
   selecting, in a first selection module (214), a predefined number of panels from a large pool of panels by using demographic details of each employee of the organization, wherein each panel comprises of two or more interviewers selected from the employees, wherein the two or more interviewers are selected for recruiting suitable candidates from the number of candidates;
   computing, in a calculation module (216), a utility score for each panel of the predefined number of panels by using the demographic details and recruitment capability of each employee from the employees, wherein the utility score is associated with one or more selection rules;
   computing, in computing modules (218), a panel-candidate matching index based on skill set of each interviewer from two or more interviewers and each candidate from the number of candidates, wherein the panel-candidate matching index is indicative of a recruitment capability of each panel with respect to the number of candidates;
   selecting, in second selection modules (220), an optimal number of interview panels from the predefined number of panels, for interviewing the number of candidates based on the panel-candidate matching index and the utility score, thereby generating the campus recruitment plan, wherein the campus recruitment plan is generated by using an optimization technique and wherein the assigning, the determining, the selecting the predefined number of panels, the computing the utility score, the computing the panel-candidate matching index, and the selecting the optimal number of interview panels is performed by a processor (202) accessing the respective modules arranged as modules of a memory (206).

2. The method of claim 1, wherein the assigning the ranking score comprises analysis of parameters, wherein the parameters comprises past performance of the employees from each colleges, test scores of the past employees, interview scores of past employees, project experience of the past employees, social index of the past employees, tenure of past employees with the organization, or a combination thereof.

3. The method of claim 1, wherein the ranking score is associated with a respective department ranking score for each department of each college.

4. The method of claim 1, wherein the number of candidates to be recruited are determined in accordance with an order of ranking score, wherein the order comprises higher ranking score to lower ranking score.

5. The method of claim 1, wherein the skill set comprises skill category and one or more subject discipline.

6. The method of claim 1, wherein the number of candidates are selected by using the Water-Filling algorithm.

7. The method of claim 1, wherein the one or more selection rules comprises rules with respect to experience of the employee, or rules with respect to relationship of the employee with the one or more colleges, or a combination thereof.

8. The method of claim 1, wherein the optimization technique comprises a Mixed Integer Linear Programming approach for generating the campus recruitment plan.

9. The method of claim 1, wherein the demographic details comprises employee's hometown, college details (name, location), graduation and/or post-graduation branch, or a combination thereof.

10. The method of claim 1, wherein the recruitment capability is indicated in terms of one or more parameters, wherein the one or more parameters comprises experience of the interviewer, performance of the interviewer in the organization, subject discipline of the interviewer, skill category of the interviewer or a combination thereof.

11. A system for generating a campus recruitment plan for facilitating selection of a candidate for an organization, the system comprising:

   a processor; and
   a memory coupled to the processor, wherein the processor is capable of executing a plurality of modules stored in the memory, and wherein the plurality of modules comprising:

      an assigning module configured to assign a ranking score to each college from a list of colleges, wherein the ranking score is assigned based on a past recruitment data of each college;
      a determination module configured to determine a number of candidates to be selected from each college based on the ranking score and a maximum quota value, wherein the maximum quota value defines a maximum limit of candidates to be recruited from each college;
      a first selection module configured to select a predefined number of panel from a large pool of panels by using demographic details of each employee of the organization, wherein each panel of the predefined number of panels comprise two or more interviewers selected from the employees, wherein the two or more interviewers are selected for recruiting suitable candidates from the number of candidates;
      a calculation module configured to calculate a utility score for each of the panel from the predefined number of panels, using the demographic details and recruitment capability of each employee, wherein the utility score is associated with one or more selection rules;
      a computing module configured to compute a panel-candidate matching index based on skill set of each interviewer from the two or more interviewers and each candidate from the number of candidates, wherein the panel-candidate matching index is indicative of a recruitment capability of each panel with respect to the number of candidates;
      a second selection module configured to select an optimal number of panels from the predefined number of panels for interviewing the number of candidates based on the panel-candidate matching index and the utility score, thereby generating the campus recruitment plan, wherein the campus recruitment plan is generated by using an optimization technique.

12. A non-transitory computer readable medium embodying a program executable in a computing device for generating a campus recruitment plan for facilitating selection of a candidate for an organization, the computer program product comprising:

   a program code for assigning a ranking score to each college from a list of colleges, wherein the ranking score is assigned based on a past recruitment data of each college;
   a program code for determining a number of candidates to be selected from each college based on the ranking score, and a maximum quota value, wherein the maximum quota value defines a maximum limit of candidates to be recruited from each college;
   a program code for selecting a predefined number of panels from a large pool of panels using the demographic details of each employee of the organization, wherein each panel comprises of two or more interviewers selected from the employees, wherein the one or more interviewers are selected for recruiting suitable candidates from the number of candidates;

a program code for computing a utility score for each panel of the predefined number of panels by using the demographic details and recruitment capability of each employee from the employees, wherein the utility score is associated with one or more selection rules;

a program code for computing a panel-candidate matching index based on skill set of each interviewer of two or more interviewers and each candidate from the number of candidates,

wherein the panel-candidate matching index is indicative of a recruitment capability of each panel with respect to the number of candidates; and

a program code for selecting an optimal number of interview panels from the predefined number of panels, for interviewing the number of candidates based on the panel-candidate matching index and the utility score, thereby generating the campus recruitment plan, wherein the campus recruitment plan is generated by using an optimization technique.

100

SYSTEM (102)

NETWORK

(106)

104 - 1    104 - 2    104 - 3    104 - N

**FIGURE 1**

SYSTEM (102)

PROCESSOR(S) (202)  INTERFACE(S) (204)

MEMORY (206)

MODULES (208)

ASSIGNING MODULE (210)

DETERMINATION MODULE (212)

FIRST SELECTION MODULE (214)

CALCULATION MODULE (216)

COMPUTING MODULES (218)

SECOND SELECTION MODULES (220)

OTHER MODULES (222)

SYSTEM DATA (224)

SYSTEM DATABASE (226)

OTHER DATA (228)

FIGURE 2

**FIGURE 3**

**FIGURE 4**

**FIGURE 5a**

**FIGURE 5b**

**600**

Assigning a ranking score to each college based on past recruitment data — **602**

Determining a number of candidates to be selected from each college — **604**

Selecting a predefined number of panels by using demographic details and the utility score — **606**

Computing a utility score for each employee of an organization by using demographic details — **608**

Computing a panel-candidate matching index based on skill set and educational background — **610**

Selecting a minimum number of panel form the predefined number of panels based on panel-candidate matching index and the utility score — **612**

FIGURE 6

Europäisches
Patentamt

European
Patent Office

Office européen
des brevets

**EUROPEAN SEARCH REPORT**

Application Number

EP 15 15 4966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The applicant is advised that in accordance with the established practice of the EPO, no search need be performed in respect of those aspects of the claimed invention.The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence is therefore considered necessary. (See Official Journal EPO 11/2007, pages 592ff and 594ff)<br><br>----- | | INV.<br>G06Q10/06<br>G06Q50/20<br>G06Q10/10<br><br><br><br><br><br><br>TECHNICAL FIELDS SEARCHED (IPC)<br><br>G06Q |

The present search report has been drawn up for all claims

| Place of search | Date of completion of the search | Examiner |
|---|---|---|
| The Hague | 17 July 2015 | Mascia, Franco |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 946MUM2014